Europäisches Patentamt

European Patent Office

Office européen des brevets

(19)

(11) Veröffentlichungsnummer : **0 170 902 B1**

## EUROPÄISCHE PATENTSCHRIFT

(12)

(45) Veröffentlichungstag der Patentschrift :
11.11.87

(21) Anmeldenummer : 85108461.6

(22) Anmeldetag : 08.07.85

(51) Int. Cl.⁴ : **G 21 C   3/62**, B 01 F 13/10

(54) **Anlage zum Bearbeiten von Kernbrennstoffpulver.**

(30) Priorität : 19.07.84 DE 3426689

(43) Veröffentlichungstag der Anmeldung :
12.02.86 Patentblatt 86/07

(45) Bekanntmachung des Hinweises auf die Patenterteilung : 11.11.87 Patentblatt 87/46

(84) Benannte Vertragsstaaten :
DE FR GB

(56) Entgegenhaltungen :
US-A- 4 174 938

(73) Patentinhaber : **ALKEM GMBH**
**Rodenbacher Chaussee 6**
**D-6450 Hanau 11 (DE)**

(72) Erfinder : **Hanus, Dietmar, Dr. Dipl.-Ing.**
**Birkenstrasse 17**
**D-8755 Alzenau (DE)**
Erfinder : **Krellmann, Jürgen, Dipl.-Ing.**
**Ringstrasse 40**
**D-8760 Miltenberg (DE)**

(74) Vertreter : **Mehl, Ernst, Dipl.-Ing. et al**
**Postfach 22 01 76**
**D-8000 München 22 (DE)**

EP 0 170 902 B1

**Beschreibung**

Die Erfindung betrifft eine Anlage zum Bearbeiten von Kernbrennstoffpulver, insbesondere $UO_2$- und $PuO_2$-Pulver, mit einem Vorratsbehälter für das Kernbrennstoffpulver und einem ersten Bearbeitungsaggregat für das Kernbrennstoffpulver, das auf räumlich tieferem Niveau als der Vorratsbehälter angeordnet ist und das eine Füllöffnung aufweist, der ein am Vorratsbehälter angebrachtes Fallrohr für das Kernbrennstoffpulver zugeordnet ist, sowie mit einem zweiten Bearbeitungsaggregat mit Füllöffnung zum Weiterbearbeiten des Kernbrennstoffpulvers.

Eine derartige Anlage ist aus der DE-A-28 03 808 bekannt. Diese bekannte Anlage dient zum Herstellen von Kernbrennstofftabletten. Sie weist als Vorratsbehälter einen Trichter auf, an dem ein Fallrohr vorgesehen ist, das in ein auf räumlich tieferem Niveau angeordnetes, aus einem Walzenverdichter bestehendes Bearbeitungsaggregat mündet. Diesem Walzenverdichter ist über ein Fallrohr als weiteres Bearbeitungsaggregat ein Granulator für das Kernbrennstoffpulver nachgeschaltet, der sich auf einem räumlich tieferen Niveau als der Walzenverdichter befindet. Auf räumlich noch tieferem Niveau ist ein Trommelmischer als Bearbeitungsaggregat angeordnet, der über ein Fallrohr dem Granulator nachgeschaltet ist. Schließlich ist diesem Trommelmischer noch eine Presse als Bearbeitungsaggregat zum Herstellen von Preßkörpern aus dem Kernbrennstoffpulver über ein weiteres Fallrohr nachgeschaltet, die sich auf dem räumlich tiefsten Niveau von allen Rearbeitungsaggregaten befindet.

In dieser Anlage eingesetztes Kernbrennstoffpulver muß die gesamte Anlage in der vorgegebenen Reihenfolge der Bearbeitungsaggregate durchlaufen d. h. schließlich zu Preßlingen verdichtet werden, bevor irgendwelche Nachbearbeitungen des Kernbrennstoffpulvers, die sich später noch als notwendig erweisen, vorgenommen werden können. Zu diesem Zweck müssen sogar die in der Presse erzeugten Preßkörper gebrochen und evtl. gemahlen werden, bevor das so rückgewonnene Kernbrennstoffpulver wieder in den Vorratstrichter eingefüllt werden und die Anlage erneut durchlaufen kann.

Der Erfindung liegt die Aufgabe zugrunde, hier Abhilfe zu schaffen und ein Nachbearbeiten des Kernbrennstoffpulvers sofort nach jedem Bearbeitungsschritt in einem Bearbeitungsaggregat zur ermöglichen.

Zur Lösung dieser Aufgabe ist eine Anlage der eingangs erwähnten Art erfindungsgemäß dadurch gekennzeichnet, daß beide Bearbeitungsaggregate nebeneinander und oberhalb eines Transportniveaus angeordnet und mit ihren Füllöffnungen um eine zur Richtung der Schwerkraft rechtwinklige Schwenkachse schwenkbar sind und daß ein an die Füllöffnungen beider Bearbeitungsaggregate ankoppelbarer Transportbehälter vorgesehen ist, der im Transportniveau von einem Bearbeitungsaggregat zum anderen verschiebbar ist.

Wird nach dem Abfüllen des bearbeiteten Kernbrennstoffpulvers aus einem der Bearbeitungsaggregate dieser Anlage in den Transportbehälter festgestellt, daß das Kernbrennstoffpulver im ersten Bearbeitungsaggregat noch nicht ausreichend bearbeitet war, kann der Transportbehälter im ebenen Transportniveau zurückgeschoben, wieder an das erste Bearbeitungsaggregat angekoppelt und das Kernbrennstoffpulver durch Schwenken dieses Bearbeitungsaggregates um die zur Richtung der Schwerkraft rechtwinklige Achse in das erste Bearbeitungsaggregat zurückgefüllt und dann in diesem ersten Bearbeitungsaggregat nachbearbeitet werden. Anschließend kann das Kernbrennstoffpulver aus dem ersten Bearbeitungsaggregat durch Schwenken desselben um die zur Richtung der Schwerkraft rechtwinklige Achse wieder in den Transportbehälter abgefüllt werden. Der Transportbehälter wird sodann vom ersten Bearbeitungsaggregat abgekoppelt und im Transportniveau vom ersten Bearbeitungsaggregat zum zweiten Bearbeitungsaggregat verschoben. Dort kann beispielsweise der Transportbehälter an das zweite Bearbeitungsaggregat angekoppelt werden. Dieses zweite Bearbeitungsaggregat wird sodann um die zur Richtung der Schwerkraft rechtwinklige Achse geschwenkt und as Kernbrennstoffpulver aus dem Transportbehälter in das zweite Bearbeitungsaggregat eingefüllt, wo es anschließend der in diesem zweiten Bearbeitungs-aggregat vorgesehenen Bearbeitung unterworfen wird.

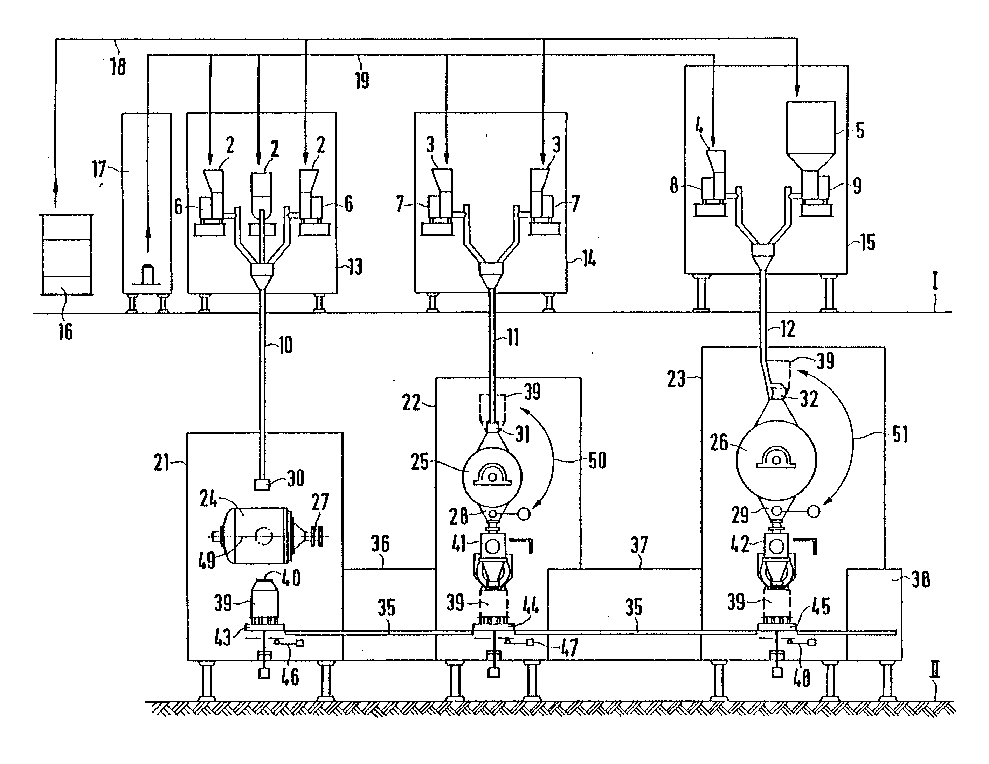

In der Zeichnung ist stark schematisiert eine Anlage zum Mahlen und Mischen von $UO_2$- und $PuO_2$-Pulver dargestellt. Diese Anlage weist Vorratsbehälter 2, 3, 4 und 5 für $UO_2$-, $PuO_2$- und $Gd_2O_3$-Pulver auf. Bei $Gd_2O_3$ handelt es sich um ein pulverförmiges Additiv, das ein abbrennbares Neutronengift ist.

Jedem der Vorratsbehälter 2, 3, 4 und 5 ist jeweils über eine Dosiervorrichtung 6, 7, 8 und 9 ein Abzweigfallrohr nachgeschaltet. Die Abzweigfallrohre der zu den Vorratsbehältern 2 gehörenden Dosiervorrichtungen 6 münden in ein Fallrohr 10, die Abzweigfallrohre der zu den Vorratsbehältern 3 gehörenden Dosiervorrichtungen 7 münden in ein Fallrohr 11 und die Abzweigfallrohre der dem Vorratsbehälter 4 zugeordneten Dosiervorrichtung 8 und der dem Vorratsbehälter 5 zugeordneten Dosiervorrichtung 9 münden in ein Fallrohr 12. Alle Abzweigfallrohre bzw. Fallrohre sind wenigstens annähernd vertikal angeordnet.

Die Vorratsbehälter 2 mit den zugehörigen Dosiervorrichtungen 6 sind in einem ersten Handschuhkasten 13, die Vorratsbehälter 3 mit den zugehörigen Dosiervorrichtungen 7 in einem zweiten Handschuhkasten 14 und die Vorratsbehälter 4 und 5 mit den zugehörigen Dosiervorrichtungen 8 bzw. 9 sind in einem dritten Handschuhkasten 15 angeordnet. Alle drei Handschuhkästen 13 bis 15 sind nebeneinander auf demselben ebenen und horizontalen räumlichen Niveau I angebracht. Neben dem Handschuhkasten 13 sind in demselben ebene räumlichen Niveau I ferner eine Abfüllstation 16 und ein Handschuhkasten 17 angeordnet, in dem sich eine weitere Abfüllstation befindet. Die in dem Handschuhkasten 17 befindliche Abfüllstation ist für radioaktives und/oder radiotoxisches Material wie z. B. $PuO_2$-Pulver bestimmt, während die Abfüllstation 16 für normales Material wie z. B. $UO_2$- und $Gd_2O_3$-Pulver zu verwenden ist. Der Abfüllstation 16 ist eine Rohrleitung 18 zugeordnet, von der jeweils eine Zweigrohrleitung in jeden der Handschuhkästen 13 bis 15 zu einem Vorratsbehälter 2 bzw. 3 und 5 führt. Von der Abfüllstation in dem Handschuhkasten 17 geht eine weitere Rohrleitung 19 ab, von der zwei Zweigrohrleitungen in den Handschuhkasten 13 zu jeweils einem Vorratsbehälter 2, eine Zweigrohrleitung in den Handschuhkasten 14 zu einem anderen Vorratsbehälter 3 und eine Abzweigrohrleitung in den Handschuhkasten 15 zu dem Vorratsbehälter 4 geführt sind.

Auf einem ebenen, horizontalen räumlichen Transport-niveau II, das niedriger als das Niveau I ist, sich also unterhalb des Niveaus I befindet, sind drei weitere Handschuhkästen 21 bis 23 angeordnet. Im Handschuhkasten 21 befindet sich als Bearbeitungsaggregat eine Mahltrommel 24, während in den Handschuhkästen 22 und 23 jeweils ein aus einem Mischer mit einem Mischergehäuse 25 bzw. 26 bestehendes Bearbeitungsaggregat angeordnet ist. Die Mahltrommel 24 kann mit ihrer Füllöffnung 27 um eine zur Schwerkraft rechtwinklige Schwenkachse d. h. um eine zum ebenen Transportniveau II parallele und in der Zeichnung z. B. zur Zeichenebene senkrechte Schwenkachse geschwenkt werden.

Der Mischer mit dem Mischergehäuse 26 im Handschuhkasten 23 hat beispielsweise das vierfache Fassungsvermögen des Mischers mit dem Mischergehäuse 25 im Handschuhkasten 22. Auch die Mischergehäuse 25 und 26 können mit ihrer Füllöffnung 28 bzw. 29 um eine zur Schwerkraft rechtwinklige Schwenkachse d. h. um eine zum ebenen Transportniveau II parallele und in der Zeichnung z. B. zur Zeichenebene senkrechte Schwenkachse geschwenkt werden.

Während das vom Handschuhkasten 13 ausgehende Fallrohr 10 in den Handschuhkasten 21 mit der Mahltrommel 24 geführt ist und dort eine Kopplungsöffnung 30 zum Ankoppeln der mit einem nicht dargestellten Schieber verschließbaren Füllöffnung 27 der Mahltrommel 24 aufweist, sind die von den Handschuhkästen 14 und 15 ausgehenden Fallrohre 11 und 12 jeweils in die Handschuhkästen 22 bzw. 23 geführt und dort an einem ortsfesten, mit einer Drehdurchführung in den Mischer versehene Einfüllstutzen 31 bzw. 32 des Mischergehäuses 25 bzw. 26 angeschlossen.

Im Transportniveau II ist eine horizontale, zum Transportniveau II parallele Rollenbahn 35 vorgesehen, die sich durch die auf dem Transportniveau II nebeneinander angeordneten Handschuhkästen 21 bis 23 sowie durch Verbindungstunnel 36 zwischen den Handschuhkästen 21 und 22, 37 zwischen den Handschuhkästen 22 und 23 und 38 am Handschuhkasten 23 zum Ankoppeln eines nicht dargestellten fahrbaren Handschuhkastens erstreckt.

Auf der Rollenbahn 35 ist ein außen an seinem Boden mit Rollen versehener Transportbehälter 39 parallel zum Transportniveau II d. h. horizontal durch die Handschuhkästen 21 bis 23 und die Verbindungstunnel 36 bis 38 hin und her verschiebbar. Dieser Transportbehälter 39, der sich also zwischen der Mahltrommel 24 sowie den Mischergehäusen 25 und 26 einerseits und dem Transportniveau II andererseits befindet, weist seinerseits eine mit einem nicht dargestellten Schieber verschließbare Füllöffnung 40 auf, mit der an die Füllöffnung 27 der Mahltrommel 24 und an die Füllöffnung 28 und 29 der Mischergehäuse 25 und 26 ankoppelbar ist, die ebenfalls jeweils mit einem Schieber verschließbar sind. In den Handschuhkästen 22 und 23 ist ferner jeweils eine Sieb- und Passiermaschine 41 bzw. 42 vorgesehen, die unter die Füllöffnung 28 bzw. 29 des Mischergehäuses 25 bzw. 26 bei Bedarf geschwenkt und an die Füllöffnung 28 bzw. 29 angeschlossen werden kann. Die Füllöffnung 40 des Transportbehälters 39 kann dann an diese Sieb- und Passiermaschine 41 und 42 angekoppelt werden.

In der Rollenbahn 35 befindet sich in jedem der Handschuhkästen 21 bis 23 eine Hubstation 43 bis 45 zum vertikalen Anheben des Transportbehälters 39 beim Ankoppeln desselben an die Füllöffnung 27 der Mahltrommel 24 bzw. die Füllöffnungen 28 und 29 der Mischergehäuse 25 und 26 bzw. die Sieb- und Passiermaschinen 41 und 42. Jeder dieser Hubstationen 43 bis 45 ist noch eine Waage 46 bis 48 zum Wiegen des Transportbehälters 39 zugeordnet.

$UO_2$-Pulver und $Gd_2O_3$-Pulver als Additiv werden aus der Abfüllstation 16 über die Rohrleitung 18 und $PuO_2$-Pulver aus der Abfüllstation im Handschuhkasten 17 über die Rohrleitung 19 pneumatisch in die Vorratsbehälter 2 bis 5 in den Handschuhkästen 13 bis 15 gefördert. Sodann wird die Mahltrommel 24 so geschwenkt, daß ihre Füllöffnung 27 an das Anschlußteil 30 des Fallrohres 10 angeschlossen werden kann. Hierauf werden mit Hilfe der Dosiervorrichtungen 6 in der Handschuhbox 13 vorgeschriebene Mengen $UO_2$, $Gd_2O_3$- und $PuO_2$-Pulver über das Fallrohr 10 in die Mahltrommel 24 eingefüllt. Anschließend wird die Füllöffnung 27 der Mahltrommel 24 mit dem nicht dargestellten Schieber verschlossen und von der Kopplungsöffnung 30 des Fallrohes 10 abgekoppelt. Die Mahltrommel 24 wird sodann um die zur Zeichenebene senkrechte Achse so geschwenkt, daß die mit der Füllöffnung 27 fluchtende Mahlachse 49 der Mahltrommel 24 parallel zum horizontalen Transportniveau II steht. Hierauf wird die Mahltrommel 24 um die Mahlachse 49 in Umdrehung versetzt und das in der Mahltrommel 24 befindliche Mahlgut gemahlen.

Nach dem Mahlen des Mahlgutes wird die Mahltrommel 24 so geschwenkt, daß die Mahlachse 49 rechtwinklig zum Transportniveau II und die verschlossene Füllöffnung 27 der Mahltrommel 24 senkrecht nach unten stehen. Mit der Hubstation 43 wird sodann der Transportbehälter 39 angehoben, und schließlich wird die Füllöffnung 40 dieses Transportbehälters 39 an die Füllöffnung 27 der Mahltrommel 24 angekoppelt. Nach dem Zurückfahren der Hubstation 43 und dem Öffnen der Schieber in den Füllöffnungen 27 und 40 wird die Mahltrommel 24 mit dem angekoppelten Transportbehälter 39 so um die zur Zeichenebene rechtwinklige Achse geschwenkt, daß die Mahlachse 49 mit der Füllöffnung 27 schräg nach unten zeigt. In dieser Position wird die Mahltrommel 24 in Umdrehung um die Mahlachse 49 versetzt und das Mahlgut aus der Mahltrommel 24 in den Transportbehälter 39 entleert. Anschließend werden die Schieber in den Füllöffnungen 27 und 40 wieder geschlossen, die Mahltrommel 24 mit ihrer Mahlachse 49 wieder um die zur Zeichenebene rechtwinklige Achse so zurückgeschwenkt, daß die Mahlachse 49 rechtwinklig zum Transportniveau II steht, und die Hubstation 43 angehoben, so daß der Transportbehälter 39 von der Mahltrommel 24 abgekoppelt und auf die Hubstation 43 abgesetzt werden kann. Nach dem Wiederabsenken der Hubstation 43 kann der Transportbehälter 39 mit dem Mahlgut über die Rollenbahn 35 durch den Tunnel 36 in den Handschuhkasten 22 und gegebenenfalls durch den Verbindungstunnel 37 in den Handschuhkasten 33 verschoben werden.

Soll mit dem Mahlgut im Transportbehälter 39 eine Mischung mit hohem Plutoniumgehalt hergestellt werden, so ist diese Mischung zum Vermeiden einer kritischen Masse im Mischer mit dem kleinen Mischergehäuse 25 herzustellen, während Mischungen mit geringerem Plutoniumgehalt im Mischer mit dem größeren Mischergehäuse 26 im Handschuhkasten 23 gewonnen werden können. Je nachdem wird also der Transportbehälter 39 entweder auf der Hubstation 44 oder auf der Hubstation 45 angehoben und mit seiner Füllöffnung 40 an die Füllöffnung 28 des Mischergehäuses 25 bzw. an die Füllöffnung 29 des Mischergehäuses 26 angekoppelt. Nach dem Öffnen der Schieber in der Füllöffnung 40 des Transportbehälters 39 und in den Füllöffnung 40 des Transportbehälters 39 und in den Füllöffnungen 28 bzw. 29 der Mischergehäuse 25 bzw. 26 werden nach Absenken der Hubstation 44 bzw. 45 das Mischergehäuse 25 bzw. 26 mit dem angekoppelten Transportbehälter 39 um eine zur Zeichenebene rechtwinklige und zum Transportniveau II parallele Schwenkachse entsprechend den Doppelpfeilen 50 und 51 so geschwenkt, daß sich der Transportbehälter 39 in der gestrichelt angedeuteten Position zwischen dem Handschuhkasten 14 und dem Mischergehäuse 25 bzw. zwischen dem Handschuhkasten 15 und dem Mischergehäuse 26 befindet, in der seine Längsachse rechtwinklig zum Transportniveau II ist und das Mahlgut aus dem Transportbehälter 39 in das Mischergehäuse 25 bzw. 26 entleert wird.

Nach dem Verschließen der Füllöffnungen 28 bzw. 29 der Mischergehäuse 25 bzw. 26 und der Füllöffnung 40 des Transportbehälters 39 mit den zugeordneten Schiebern kann der Transportbehälter 39 entsprechend den Doppelpfeilen 50 bzw. 51 wieder zurückgeschwenkt, vom Mischergehäuse 25 bzw. 26 abgekoppelt und auf der wieder angehobenen Hubvorrichtung 44 bzw. 45 abgesetzt werden.

Während des Mischens in den Mischern mit den Mischergehäusen 25 bzw. 26 können dem in dem entsprechenden Mischer befindlichen Mahlgut noch Zusätze aus dem Vorratsbehälter 3 in dem Handschuhkasten 14 bzw. aus den Vorratsbehältern 4 und 5 im Handschuhkasten 15 durch das Fallrohr 11 bzw. 12 zugesetzt werden.

Nach Abschluß des Mischens wird die Sieb- und Passiermaschine 41 bzw. 42 unter die gegenüber dem Transportniveau II befindliche Füllöffnung 28 bzw. 29 des Mischergehäuses 25 bzw. 26 geschwenkt und an die Füllöffnung 28 bzw. 29 angekoppelt. Sodann wird der Transportbehälter 39 mit der Hubvorrichtung 44 bzw. 45 angehoben und ebenfalls an die Sieb- und Passiermaschine 41 bzw. 42 angekoppelt. Nach dem Öffnen der Schieber in der Füllöffnung 28 bzw. 29 und in der Füllöffnung 40 des Transportbehälters 39 wird das Mischgut aus dem Mischergehäuse 25 bzw. 26 mit Hilfe der Sieb- und Passiermaschine 41 bzw. 42 wieder in den Transportbehälter 39 abgefüllt.

Nach Verschließen des Schiebers in der Füllöffnung 40 des Transportbehälters 39 und Absenken der Hubvorrichtung 44 bzw. 45 kann der Transportbehälter 39 gegebenenfalls durch den Verbindungstunnel 37 zum Verbindungstunnel 38 über die Rollenbahn 35 verschoben werden. Aus dem Verbindungstunnel 38 kann der Trasnportbehälter 39 schließlich in dem am Verbindungstunnel 38 angekoppelten fahrbaren Handschuhkasten abgestellt und mit diesem fahrbaren Handschuhkasten zu einer Presse gefahren werden, in der das pulverförmige Mischgut im Transportbehälter 39 zu Kernbrennstofftabletten verpreßt wird.

Erforderlichenfalls kann der Transportbehälter 39 aber auch über die Rollenbahn 35 zur Mahltrommel 24 zurückgeschoben und in die Mahltrommel 24 entleert werden, in der das Mischgut aus dem Transportbehälter 39 nachgemahlen wird.

## Patentansprüche

1. Anlage zum Bearbeiten von Kernbrennstoffpulver, insbesondere von $UO_2$- und $PuO_2$-Pulver, mit einem Vorratsbehälter für das Kernbrennstoffpulver und einem ersten Bearbeitungsaggregat für das Kernbrennstoffpulver, das auf räumlich tieferem Niveau als der Vorratsbehälter angeordnet ist und das eine Füllöffnung aufweist, der ein am Vorratsbehälter angebrachtes Fallrohr für das Kernbrennstoffpulver zugeordnet ist, sowie mit einem zweiten Bearbeitungsaggregat mit Füllöffnung zum Weiterverarbeiten des Kernbrennstoffpulvers, dadurch gekennzeichnet, daß beide Bearbeitungsaggregate (24 bzw. 25, 26) nebeneinander und oberhalb eines Transportniveaus (II) angeordnet und mit ihren Füllöffnungen (27, 28, 29) um eine zur Richtung der Schwerkraft rechtwinklige Achse schwenkbar sind und daß ein an die Füllöffnungen (27, 28, 29) beider Bearbeitungsaggregate (24 bzw. 25, 26) ankoppelbarer Transportbehälter (39) vorgesehen ist, der im Transportniveau (II) von einem Bearbeitungsaggregat (24 bzw. 25, 26) zum anderen verschiebbar ist.

2. Anlage nach Anspruch 1, dadurch gekennzeichnet, daß dem zweiten Bearbeitungsaggregat (25, 26) ein Vorratsbehälter (3, 4, 5) mit Fallrohr (11, 12) für das Kernbrennstoffpulver zugeordnet ist, der sich oberhalb dieses zweiten Bearbeitungsaggregates (25, 26) befindet.

### Claims

1. An installation for treating nuclear fuel powder, in particular uranium oxide powder and plutonium oxide powder, comprising a storage container for the nuclear fuel powder, a first processing unit for the nuclear fuel powder, positioned at a lower level in space than the storage container and having a filling opening for the nuclear fuel powder to which is assigned a down pipe, connected to the storage container and a second processing unit with a filling opening for the further treatment of the nuclear fuel powder, characterised in that both processing units (24 or 25, 26) are positioned next to one another and above a transporting level (II) and are pivotable at their filling openings (27, 28, 29) about an axis at right-angles to the direction of gravity ; and that a transport container (39) is provided which can be connected to the filling openings (27, 23, 29) of both processing units (24 or 25, 26) and which container can be moved on the transporting level (11) from one processing unit (24 or 25, 26) to the other.

2. An installation as claimed in Claim 1, characterised in that the second processing unit (25, 26) is provided with a storage container (3, 4, 5) with a down pipe (11, 12) for the nuclear fuel powder, this storage container being located above this second processing unit (25, 26).

### Revendications

1. Installation de traitement de poudre de combustible nucléaire, notamment de poudre de $UO_2$ et de $PuO_2$, comprenant un réservoir pour la poudre de combustible nucléaire et un premier équipement de traitement de la poudre de combustible nucléaire qui est disposé à un niveau plus bas dans l'espace que le réservoir et qui comporte un orifice de chargement auquel est associé un tuyau de descente pour la poudre de combustible nucléaire monté sur le réservoir, ainsi qu'un second équipement de traitement ayant un orifice de chargement pour le traitement ultérieur de la poudre de combustible nucléaire, caractérisé en ce que les deux équipements de traitement (24 et 25, 26) sont disposés côte à côte et au-dessus d'un niveau de transport (II) et peuvent basculer avec leur orifice de chargement (27, 28, 29) autour d'un axe perpendiculaire à la direction de la force de gravité, et en ce qu'il est prévu un réservoir de transport (39) qui peut être accouplé aux orifices de chargement (27, 28, 29) des deux équipements de traitement (24 et 25, 26) et qui peut coulisser au niveau de transport (II) d'un équipement de traitement (24 et 25, 26) à l'autre.

2. Installation suivant la revendication 1, caractérisé en ce qu'au second équipement de traitement (25, 26) est associé un réservoir (3, 4, 5) ayant un tuyau de descente (11, 12) pour la poudre de combustible nucléaire, qui se trouve au-dessus de ce second équipement de traitement (25, 26).

0 170 902